Europäisches Patentamt

European Patent Office

Office européen des brevets

(19)

(11) **EP 1 094 614 A2**

(12) **EUROPEAN PATENT APPLICATION**

(43) Date of publication:
25.04.2001 Bulletin 2001/17

(51) Int. Cl.7: **H04B 1/707**

(21) Application number: 00308555.2

(22) Date of filing: 29.09.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 18.10.1999 JP 29494099

(71) Applicant:
**Kokusai Electric Co., Ltd.
Tokyo 164-0003 (JP)**

(72) Inventor: **Satoh, Osamu
Nakano-ku, Tokyo 164-0003 (JP)**

(74) Representative:
**Nicholls, Michael John
J.A. KEMP & CO.
14, South Square
Gray's Inn
London WC1R 5LX (GB)**

(54) **CDMA transmitter**

(57) The present invention provides a CDMA transmitter having a limiter for limiting an amplitude value of a CDMA spreaded signal to a value not more than a predetermined maximum amplitude value to output it. Accordingly, the present invention realizes improvement of the accuracy with respect to the signals to be outputted from the limiter compared to the conventional signals and reduction of the electric power consumption.

The limiter of the present invention comprises distribution means for distributing spreaded signals S1(I) and S1(Q), comparing means for comparing the amount of the amplitude value A of the spreaded signal with the amount of the maximum amplitude value Ath, amplitude value conversion means for converting the amplitude value of one distributed signal into the maximum amplitude value and selecting means for outputting the distributed signal of which amplitude value is converted as transmission signals S2 (I) and S2 (Q) when the amplitude value of the spreaded signal is larger than the maximum amplitude value and outputting other distributed signal as a transmission signal when the amplitude value of the spreaded signal is smaller than the maximum amplitude value. Other configuration of the present invention is provided such that sleep means rests a whole or a portion of the amplitude converting processing and reduces the electric power consumption when the

FIG. 1

**Description**

The present invention relates to a limiter for limiting an amplitude value of a CDMA spreaded signal to a value not more than a predetermined maximum amplitude value to output the amplitude value and a CDMA transmitter having such a limiter. The present invention especially relates to the art to improve the accuracy of the signals to be outputted from the limiter when the amplitude value of the spreaded signal is smaller than the maximum amplitude value compared with the accuracy of the conventional accuracy of the signal and the art to reduce the electric power consumption.

For example, in a W-CDMA (Wideband-CDMA) system, a radio communication of spreaded signals to be generated resulting from spreading transmitted data by spreaded codes is carried out between a base station and a mobile station. In such a radio communication, for example, allocating different spreaded codes for every communication channel allows one base station equipment to use a plurality of communication channels to realize a multiple communication with a plurality of mobile station equipments. Further, the spreaded codes are configured as a code pattern which is made of alignments of, for example, two values (for example, +1 and -1) in various orders.

At first, a transmitting circuit of the above described base station equipments and a transmitting circuit of the above described mobile station equipments will be described.

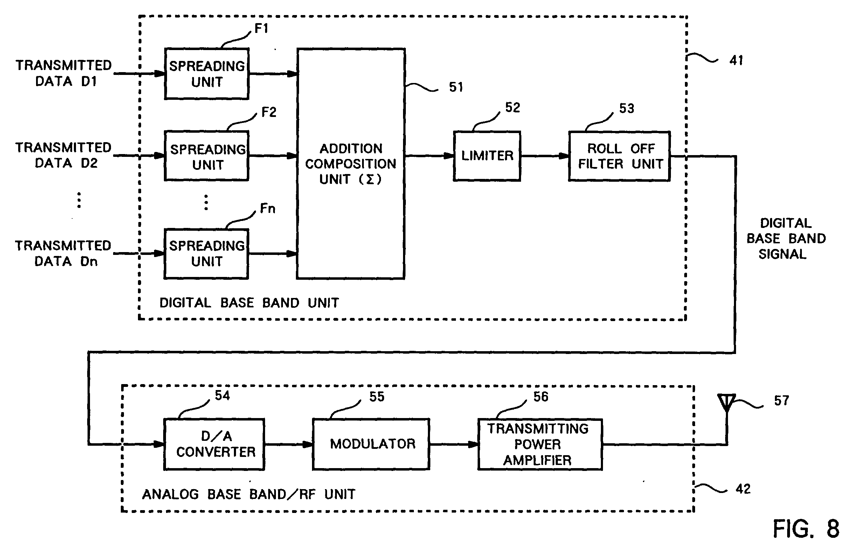

FIG. 8 illustrates an example of a transmitting circuit (CDMA transmitter) which is provided in the base station equipment of the W-CDMA system. The transmitting circuit shown in FIG. 8 comprises a digital base band unit 41 and an analog base band/RF unit 42. The digital base band unit 41 processes the digital base band signals and the analog base band/RF unit 42 processes analog base band signals and RF (radio frequency) signals.

The digital base band unit 41 comprises n pieces of spreading units F1 - Fn, an addition composition unit 51, a limiter 52 and a roll off filter 53. The spreading units spreading transmitted data D1 - Dn by the spreaded codes to generate the spreaded signals. The addition composition unit 51 sums up n pieces of the spreaded signals. The limiter 52 limits the amplitude values of the signals. The roll off filter 53 applies a spectrum forming processing to the signals. In this arrangement, the n pieces of the spreading units F1 - Fn, for example, correspond to different communication channels, respectively. The respective spreading units F1 - Fn, which are different each other, realizes a multiple communication of n channels.

The analog base band/RF unit 42 comprises a digital-analog converter (D/A converter) 54, a modulator 55, a transmitting power amplifier 56 and an antenna 57. The digital-analog converter (D/A converter) 54 converts digital signals into analog signals. The modulator 55 modulates carrier waves (carrier) in radio frequency bands. The transmitting power amplifier 56 amplitudes the power of the signals. The antenna 57 radio transmits the signals.

An example of the operations, which are carried out in the transmission circuit of the base station equipment having the above configuration, is explained below.

In other words, the transmission circuit of the base station equipment at first spreading the transmitted data D1 - Dn of respective communication channels in the spreading units F1 - Fn, which are corresponding to respective communication channels. Then, the transmission circuit of the base station equipment sums up the n pieces of spreaded signals generated in n pieces of the spreading units F1 - Fn by the addition composition unit 51. Next, the transmission circuit limits the amplitude value of the sum up result (combined spreaded signal) obtained in the addition composition unit 51 by using the limiter 52. As a result, for example, the amplitude value of the combined spreaded signal is limited to not higher than a predetermined value (the maximum amplitude value). Then, the combined spreaded signal is spectrum formed by the roll off filter 53 so that the occupation bandwidth of the combined spreaded signal is limited, for example, to a predetermined area.

Further, in the transmission circuit, the digital-analog converter (D/A converter) 54 converts the digital base band signals to be outputted from the roll off filter 53 into the analog base band signals and the modulator 55 modulates the carrier by using the analog base band signals. Then, the transmission circuit makes the power of the signal strong enough to cover a service area of the base station equipment by amplifying the signals in the radio frequency band, which are obtained from the above modulation using the transmitting power amplifier 56. Thus, the transmission circuit transmits the amplified signals from the antenna 57 to the service area.

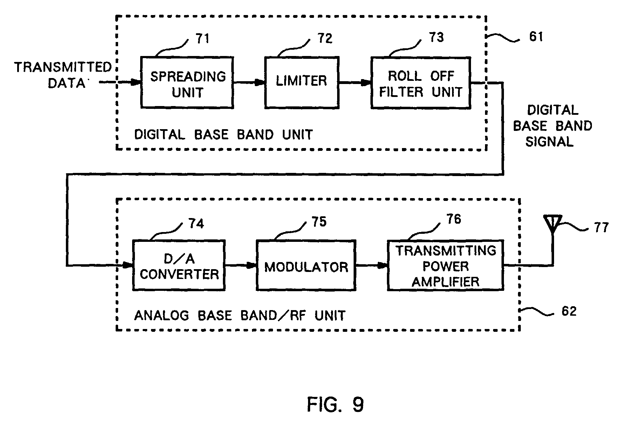

FIG. 9 shows an example of a transmission circuit (CDMA transmitter) provided in the mobile station equipment of the W-CDMA system. This transmission circuit comprises a digital base band unit 61 and an analog base band/RF unit 62 in the same way as the above described transmission circuit. The digital base band unit 61 processes the digital base band signals and the analog base band/RF unit 62 processes analog base band signals and RF (radio frequency) signals.

The digital base band unit 61 comprises a spreading unit 71, a limiter 72 and a roll off filter 73. The spreading unit 71 diffuses the transmitted data by the spreaded codes to generate the spreaded signals. The limiter 72 limits the amplitude values of the signals. The roll off filter 73 applies a spectrum forming processing to the signals. In this arrangement, the spreading unit 71 corresponds to the communication channel, which is allocated to the mobile station equipment. The respective spreading unit 71 employs the spreaded codes, which are allocated to the mobile station equipment.

The analog base band/RF unit 62 comprises a digital-analog converter (D/A converter) 74, a modulator 75, a transmitting power amplifier 76 and an antenna 77 in the same way as the above described analog base band/RF unit 42. The digital-analog converter (D/A converter) 74 converts digital signals into analog signals. The modulator 75 modulates carrier waves (carrier) in radio frequency bands. The transmitting power amplifier 76 amplitudes the power of the signals. The antenna 77 radio transmits the signals.

An example of the operations, which are carried out in the transmission circuit of the mobile station equipment having the above configuration, is explained below.

In other words, the transmission circuit of the mobile station equipment at first spreading the transmitted data in the spreading unit 71. Then, the transmission circuit limits the amplitude value of the spreaded signal by using the limiter 72. As a result, the amplitude value of the spreaded signal is limited, for example, to a value not higher than a predetermined value (the maximum amplitude value). Then, the spreaded signal, of which amplitude is limited in the above, is spectrum formed by the roll off filter 73 so that the occupation bandwidth of the spreaded signal is limited, for example, to a predetermined area.

Then, in the transmission circuit, the digital-analog converter (D/A converter) 74 converts the digital base band signals to be outputted from the roll off filter 73 into the analog base band signals and the modulator 75 modulates the carrier by using the analog base band signals. Then, the transmission circuit makes the power of the signal strong enough necessary for covering a service area of the base station equipment by amplifying the signals in the radio frequency band, which are obtained from the above modulation using the transmitting power amplifier 76. Thus, the transmission circuit radio transmits the amplified signals from the antenna 77 to the service area.

The limiters 52, 72, which are provided in the transmission circuit of the above explained base station equipment and the above explained mobile station equipment are explained in detail.

The limiters 52 and 72 provided in the transmission circuit limit the amplitude value of, for example, the spreaded signal (the combined spreaded signal in the case of the base station equipment) to a value not more than the predetermined maximum amplitude value, so that the required dynamic range and the linearity of the analog base band/RF units 42 and 62 are moderated and the efficiencies of the transmitting power amplifiers 56 and 76 are increased. Specifically, for example, even when the dynamic range and the linearity of the transmitting power amplifiers 56 and 76 are limited to the relatively narrow area, the limitation of the amplitude by using the limiters 52 and 72 allows the data error property to be improved.

Considering the base station equipment for multiplexing one hundred channels on the assumption that the amplitude value per one channel is a (the average power value is $a^2$), the average power value becomes $100\,a^2$, the peak power value becomes $(100\,a^2)$ and the peak power value becomes one hundred times as the average power value, i.e., 20 dB. In this state, the transmitting power amplifiers 56 should be provided with a range of 10 kW to maintain the linearity of the analog base band/RF units 42 at the value higher by 20 dB than the average power value and carry out, for example, 1W/channel communication. However, in practice, the transmitting power amplifiers 56 having a smaller range than 10 kW may be generally used.

An example of a configuration of a conventional limiter is explained below.

This example shows that the spreaded signal of the synchronous phase component (I component) and the spreaded signal of the quadrature component (Q component) are processed, on the assumption that, for example, the communication using QPSK modulation is effected.

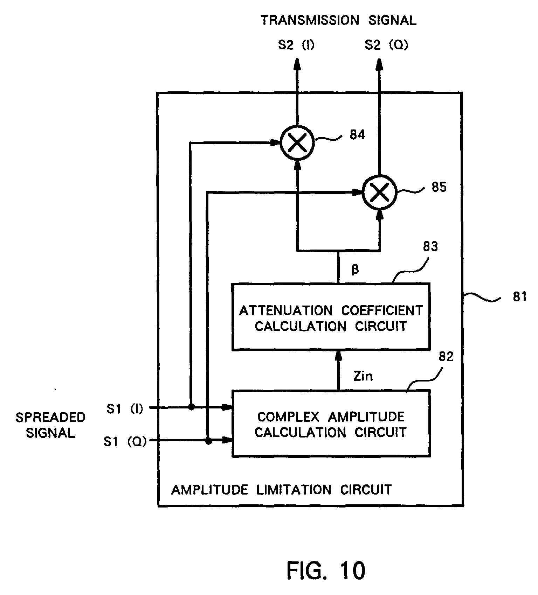

FIG. 10 illustrates a configuration of an amplitude limitation circuit 81, which is disclosed in Japanese Laid Open Patent Publication No. 8-79132 (hereinafter, refereed to as a reference 1). This amplitude limitation circuit 81 corresponds to the above described limiter.

In the amplitude limitation circuit 81 shown in FIG. 10, the spreaded signal S1 (I) with the I component and the spreaded signal S1 (Q) with the Q component are inputted and a complex amplitude value Zin of the above spreaded signal (the I component and the Q component) is calculated by a complex amplitude calculation circuit 82. Here, the value of the spreaded signal S1 (I) is defined as I and the value of the spreaded signal S1 (Q) is defined as Q. The complex amplitude value Zin is shown below by a mathematical equitation 1.

(Formula 1)

$$Zin = \{ (I)^2 + (Q)^2 \}^{1/2} \qquad \text{(equitation 1)}$$

In the amplitude limitation circuit 81 shown in FIG. 10, an attenuation coefficient β depending on the complex amplitude value Zin, which is calculated by a complex amplitude calculation circuit 82, is calculated by an attenuation coefficient calculation circuit 83. Assumed that the predetermined maximum amplitude value is Zmax, the attenuation coefficient β is calculated as shown in a mathematical equitation (2) in the case that the complex amplitude value Zin is not more than the maximum amplitude value Zmax. On the other hand, when the complex amplitude value Zin is more than the maximum amplitude value Zmax, the attenuation coefficient β is calculated as shown in a mathematical equitation (3).

(Formula 2)

$$\beta = 1 \qquad \text{(equitation 2)}$$

(Formula 3)

$$\beta = Zmax/Zin \qquad \text{(equitation 3)}$$

In the amplitude limitation circuit 81, an attenuation coefficient β calculated by the attenuation coefficient calculation circuit 83 is multiplied by the spreaded signal S1 (I) with the I component in a multiplication circuit 84 to output the result of the multiplication as a transmission signal S2 (I) with the I component. At the same time, the attenuation coefficient β is multiplied by the spreaded signal S1 (Q) with the Q component in a multiplication circuit 85 to output the result of the multiplication as a transmission signal S2 (Q) with the Q component.

The above described operations allow a complex amplitude values of the transmission signals (the I component and the Q component) to be outputted from the amplitude limitation circuit 81 to be maintained not more than the maximum amplitude value Zmax. The above stated portable telephone base station equipment using a direct sequence spectrum system, which is disclosed in the cited reference 1, limits amplitudes of the transmission signals (the I component and the Q component) by using the amplitude limitation circuit 81 as described above, so that the portable telephone base station equipment is capable of using a transmission power amplifier having an acceptable dynamic range, which is smaller than the dynamic range of the multiplexed spreaded signals, when the signals of a plurality of channels are applied with code divisional multiplex to be transmitted.

Japanese Laid Open Patent Publication No. 10-178414 (hereinafter, referred to as a cited reference 2) discloses the same configuration as that of the amplitude limitation circuit 81 shown in FIG. 10. In the configuration disclosed in the cited reference 2, the coefficient or the like to be determined based on an envelope value of the inputted spreaded signal (the I component and the Q component) is multiplied by the spreaded signal with the I component and the spreaded signal with the Q component to output the result of the multiplication as a transmission signal with the I component and a transmission signal with the Q component. Accordingly, the amplitude value of the spreaded signal (the I component and the Q component) by a signal peak suppressing unit is limited. This signal peak suppressing unit corresponds to the above stated limiter. A code multiplex radio equipment disclosed in the cited reference 2 employs such a signal peak suppressing unit to suppress the envelope value of the code multiplex signal under the setting level, so that the efficiency of the power amplifier is improved.

Further, the cited reference 1 also discloses a configuration of an amplitude limitation circuit by the use of ROM (Read Only Memory) and a configuration of a limiter by the use of ROM.

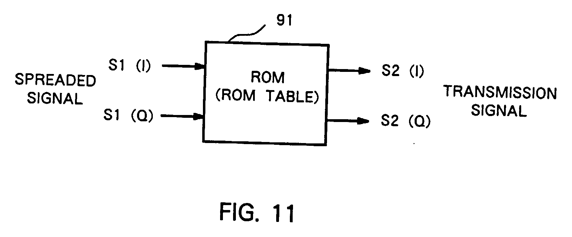

FIG. 11 illustrates an example of a configuration of a limiter, which is provided, for example, in a base station equipment. The limiter comprises ROM 91. When a bit value of the spreaded signal (the I component and the Q component) to be inputted makes an address, the ROM 91 stores ROM table for recording the bit value of the transmission signal (the I component and the Q component) corresponding to this address. In this limiter, a set of a bit value of the spreaded signal S1 (I) with the I component and a bit value of the spreaded signal S1 (Q) with the Q component makes an address. The limiter reads out a bit value of the transmission signal S2 (I) with the I component and a bit value of the transmission signal S2 (Q) with the Q component, which correspond to this address, from the ROM table and outputs them.

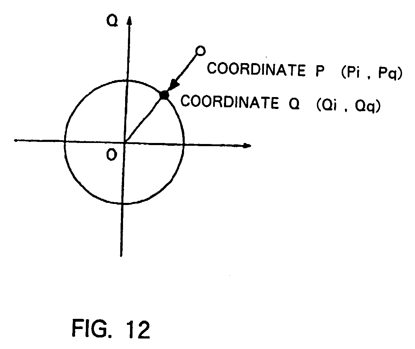

FIG. 12 conceptually illustrates an example of a relation between the address of the above mentioned ROM table and the transmission signal data to be stored in response to this address. A coordinate value of I axis on I - Q plane shown in FIG. 12 corresponds to the signal value of the I component. On the other hand, a coordinate value of Q axis on I - Q plane shown in FIG. 12 corresponds to the signal value of the Q component. Further, a radius of a circle on the I - Q plate shown in FIG. 12 corresponds to a predetermined maximum amplitude value and the value of a coordinate on the I - Q plane represented by a bit corresponds to the address of the ROM table. As shown in FIG. 12, for example, to the address of the coordinate P (Pi, Pq), which is located on the outside of the circle, a bit value of a coordinate Q (Qi, Qq) on the circumference corresponds as a transmission signal data. The coordinate Q can be obtained by scaling down the coordinate P.

Assuming that the spreaded signal S1 (I) with the I component and the spreaded signal S1 (Q) with the Q component to be inputted in the above described limiter are configured of eight bits, respectively, the limiter may secure 16 bits (8 bit × 2) as a data width corresponding to each address as well as it may secure the number of addresses as $2^{16}$. Further, the limiter may secure capacity of 1 M bit as capacity of the ROM 91.

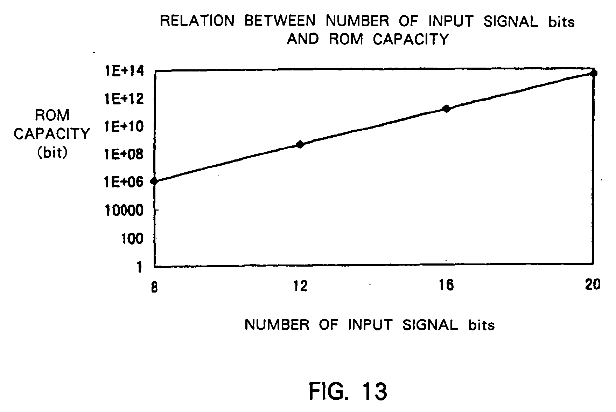

However, the limiter using the above ROM involves a problem such that the required capacity of the ROM 91 is increased to be observed as an index function as shown in FIG. 13 when the bit number of the spreaded signals S1 (I) and S1 (Q) is increased due to increasing of the number of the communication channels to be multiplexed, for example, by the base station equipment. In FIG. 13, a lateral axis represents a bit number (bit) of the spreaded signals S1 (I) and S1 (Q) to be inputted and a longitudinal axis represents a required capacity (bit) of the ROM 91.

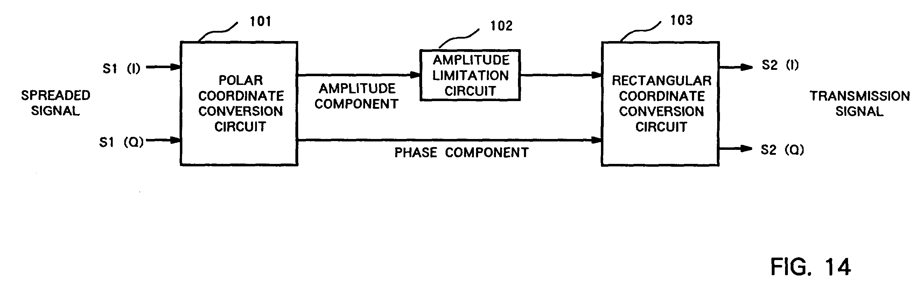

Further, FIG. 14 discloses an example of another configuration of a limiter using ROM. This limiter converts the spreaded signal S1 (I) with the I component and the spreaded signal S1 (Q) with the Q component to be inputted into an amplitude component and a phase component by a polar coordinate conversion circuit 101. An amplitude limitation circuit 102 limits the converted amplitude component so that the amplitude component is limited to a value not more than a predetermined specified maximum amplitude value. Thus, a rectangular coordinate conversion circuit 103 converts the limited amplitude component and the phase component again into the signals on the rectangular coordinate system. Then, the rectangular coordinate conversion circuit 103 outputs the signal obtained from this conversion as the transmission signal S2 (I) with the I component and the transmission signal S2 (Q) with the Q component.

The polar coordinate conversion circuit 101 and the rectangular coordinate conversion circuit 103, which compose the limiter shown in FIG. 14, are provided with ROM. The ROM stores a ROM table, in which each phase value θ, a value of cos θ and a value of sin θ are correspondingly stored. The value of cos θ and the value of sin θ are calculated corresponding to the each phase value θ . The value of cos θ and the value of sin θ are determined uniquely in response to the phase value θ . As same as the limiter shown in FIG. 11, this limiter shown in FIG. 14 also comprises ROM. Therefore, this limiter involves a problem such that the required capacity of the ROM is increased to be observed as an index function when the bit number of the spreaded signals S1 (I) and S1 (Q) to be inputted is increased.

As illustrated by the above examples of the conventional arts, the limiters using ROM shown in FIG. 11 and FIG. 14 involve a problem such that the required capacity of the ROM is increased to be observed as an index function in response to the bit number of the spreaded signals to be inputted.

The conventional limiter shown in FIG. 10 has a configuration without the above ROM. This limiter outputs the result obtained from multiplication of the spreaded signal and a specific attenuation coefficient as the transmission signal even when an amplitude value of the spreaded signal to be inputted is smaller than a specific maximum amplitude value. Accordingly, this limiter involves a problem such that the accuracy of the transmission signal is deteriorated due to the multiplication or the like, the durability of the circuit is deteriorated and the electric power consumption is increased.

The present invention has been made to solve the problems described above, an object of which is to provide a limiter and a CDMA transmitter having such a limiter which makes it possible without using ROM involving above problems upon limiting an amplitude value of the CDMA spreaded signal to a value not more than a specific maximum amplitude value to output it and which makes it possible to improve the accuracy of the signal to be outputted compared with the accuracy of the conventional signal when the amplitude value of the spreaded signal to be inputted is smaller than the above maximum amplitude value.

Further, an object of the present invention is to provide a CDMA transmitter having a limiter, which can decrease the electric power consumption when the amplitude value of the spreaded signal is smaller than the maximum amplitude value.

In order to attain the above objects, the limiter provided in the CDMA transmitter according to the present invention limits the amplitude value of the CDMA spreaded signal to a value not more than the maximum amplitude value to output it.

In other words, the limiter comprises distribution means for distributing a spreaded signal into at least two signals, comparing means for comparing the amount of the amplitude value of the spreaded signal with the amount of the maximum amplitude value, amplitude value conversion means for converting the amplitude value of one signal distributed by the distribution means into an amplitude not more than the maximum amplitude value and selecting means for outputting the one signal of which amplitude value is converted by the amplitude value conversion means as a transmission signal based on the comparison result by the comparing means when the amplitude value of the spreaded signal is larger than the maximum amplitude value and outputting other signal distributed by the distribution means as a transmission signal when the amplitude value of the spreaded signal is smaller than the maximum amplitude value.

Therefore, when the amplitude value of the spreaded signal is smaller than the maximum amplitude value, the other signal distributed by the distribution means is outputted as a transmission signal without being given such as a multiplication processing. Accordingly, it is possible to improve the accuracy of the transmission signal compared to the CDMA transmitter provided with a conventional limiter, which always outputs the result from multiplying the spreaded signal as the transmission signal. Further, the above described limiter can be composed of, for example, a logic circuit without using ROM to involve the problem as described with respect to the conventional example. Therefore, it can prevent the circuit scale from being increased to be observed as an index function even when the bit number of the spreaded signals is increased.

The CDMA transmitter according to the present invention comprises sleep means for resting a whole or a portion of the processings carried out by the amplitude value conversion means to reduce the electric power consumption when the amplitude value of the spreaded signal is smaller than the maximum amplitude value based on the comparison result of the comparing means.

Thus, in the CDMA transmitter according to the present invention, it is not necessary for the amplitude value of the one signal to be converted by the amplitude conversion means when the amplitude value of the spreaded signal is smaller than the maximum amplitude value. Accordingly, in this sate, it is possible to reduce the electric power consumption by resting a whole or a portion of the processings carried out by the amplitude conversion means.

The CDMA transmitter according to the present invention comprises an amplifier for amplifying the transmission signal outputted from the selecting means. The maximum amplitude value is set corresponding to the range of the amplifier.

In other words, there may be elements including a dynamic range of the circuit which is provided in the rear step of the limiter such as the analog base band/RF units 42, 62 as shown in FIG. 8 and FIG. 9 ,the linearity or the number of spreaded signals (when not multiplexed, the number of the multiplexed spreaded signals is set to 1), in setting the maximum amplitude value in the limiter. Specifically, the range provided in the rear step of the limiter is considered.

For example, the above described reference 1 discloses that it is possible to more improve the error property in the case that the amplitude of the spreaded signal is limited to be inputted to the transmission power amplifier compared to the case that the amplitude of the spreaded signal is not limited to be inputted in the transmission power amplifier, when the dynamic range of the transmission power amplifier cannot be maintained sufficiently to the amplitude value of the spreaded signal. The reference 1 also discloses that it is possible to calculate the optimal maximum amplitude value by the computer simulation.

The limiter provided in the CDMA transmitter is explained above. However, when it is required to limit the amplitude value of the CDMA spreaded signal to a value not more than a predetermined maximum amplitude value result from the range or the like of the circuit provided in the rear step of the limiter, there may be provided the limiter comprising the same configuration as that of the above descried limiter in the appropriate position.

In other words, as same as the above reference 1, the limiter according to the present invention comprises distribution means for distributing a spreaded signal into at least two signals, comparing means for comparing the amount of the amplitude value of the spreaded signal with the amount of the maximum amplitude value, amplitude value conversion means for converting the amplitude value of one signal distributed by the distribution means into an amplitude not more than the maximum amplitude value and selecting means for outputting the one signal of which amplitude value is converted by the amplitude value conversion means as a transmission signal based on the comparison result by the comparing means when the amplitude value of the spreaded signal is larger than the maximum amplitude value and outputting other signal distributed by the distribution means as a transmission signal when the amplitude value of the spreaded signal is smaller than the maximum amplitude value.

The invention will be further described by way of example with reference to the accompanying drawings, in which:-

FIG. 1 shows an example of a configuration of a limiter of a CDMA transmitter according to a first embodiment of the present invention;

FIG. 2 shows an example of a procedure to be carried out by a limiter according to the first embodiment of the present invention;

FIG. 3 shows an example of a result obtained comparison between a logic limiter and a conventional ROM limiter according to an example of the present invention;

FIG. 4 shows an example of a configuration of a limiter of a CDMA transmitter according to a second embodiment of the present invention;

FIG. 5 shows an example of a procedure to be carried out by a limiter according to the second embodiment of the present invention;

FIG. 6 shows an example of a configuration of a limiter of a CDMA transmitter according to a third embodiment of the present invention;

FIG. 7 shows an example of a configuration of a limiter of a CDMA transmitter according to a fourth embodiment of the present invention;

FIG. 8 shows an example of a configuration of a transmitting circuit of a base station equipment;

FIG. 9 shows an example of a configuration of a transmitting circuit of a mobile station equipment;

FIG. 10 shows an example of a conventional amplitude limitation circuit;

FIG. 11 shows an example of a configuration of conventional limiter;

FIG. 12 shows an example of a relation between the address of a ROM table and a transmission signal data to be stored in response to the address;

FIG. 13 shows an example of a relation between a bit number of a spreaded signal and a ROM capacity; and

FIG. 14 shows an example of a configuration of conventional limiter.

An embodiment of the present invention will be explained below with reference to the drawings.

In the embodiments to be explained below, the communication using, for example, QPSK modulation is carried out and the spreaded signal of the synchronous component (I component) and the quadrature component phase component (Q component) are processed. These embodiments comprise examples of a configuration of a limiter, which is provided in the CDMA transmitter according to the present invention. This limiter may be used, for example, as a limiter 52 or a limiter 72. The limiter 52 is used in a transmission circuit (CDMA transmitter) provided in the base station equipment of the W-CDMA system shown in FIG. 8 as described above. The limiter 72 is used in a transmission circuit (CDMA transmitter) provided in the mobile station equipment of the W-CDMA system as shown in FIG. 9.

Firstly, a limiter provided in the CDMA transmitter according to a first embodiment is explained with reference to the drawings.

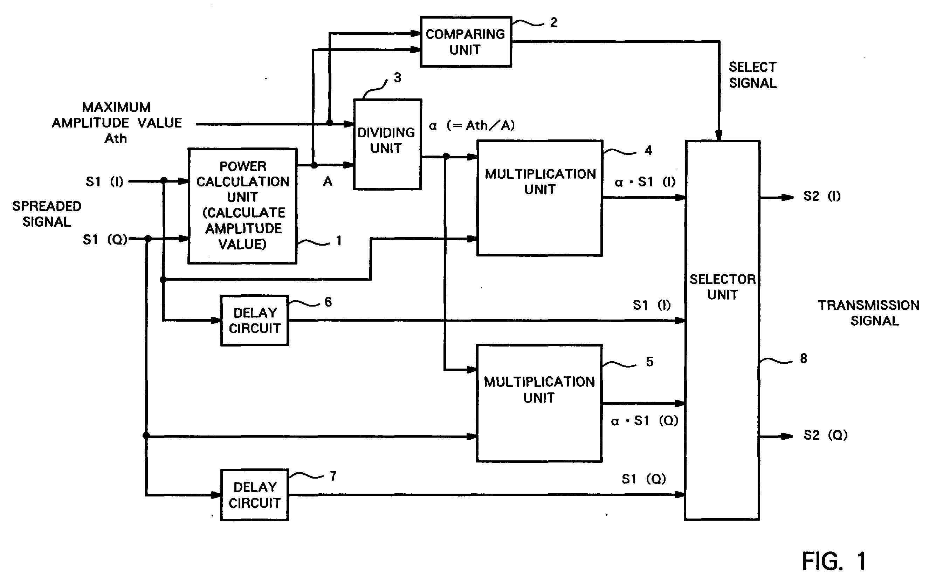

FIG. 1 illustrates a example of a configuration of the limiter of the CDMA transmitter according to the present invention. The limiter comprises a power calculation unit 1, a comparing unit 2, a division unit 3, two multiplication units 4 and 5, two delay circuits 6 and 7 and a selector unit 8. Further, the spreaded signal S1 (I) with the I component and the spreaded signal S1 (Q) with the Q component are inputted into this limiter from the outside and the spreaded signal S1 (I) with the I component and the spreaded signal S1 (Q) with the Q component are outputted from the limiter to the outside. Further, as these signals, for example, digital signals composed of a plurality of bits are employed.

In the limiter according to the present embodiment, the spreaded signal S1 (I) with the I component to be inputted from the outside is divided to be inputted in the power calculation unit 1, one multiplication unit 4 and one delay circuit 6. The spreaded signal S1 (Q) with the Q component to be inputted from the outside is divided into the power calculation unit 1, other multiplication unit 5 and other delay circuit 7. Further, the maximum amplitude value Ath may be set fixedly, for example, in the limiter. Also, a control unit of the CDMA transmitter may be configured such that it can set the maximum amplitude value Ath variably via a CPU interface or the like.

The power calculation unit 1 is inputted with the spreaded signal S1 (I) with the I component and the spreaded signal S1 (Q) with the Q component to calculate the amplitude value (the power amplitude value in the present embodiment) A of the inputted spreaded signals. Then, the power calculation unit 1 outputs the calculated amplitude value A to the comparing unit 2 and the dividing unit 3. The amplitude value A is shown in the equitation (4). Here, the value of the spreaded signal S1 (I) with the I component is defined as I and the value of the spreaded signal S1 (Q) with the Q component is defined as Q.

(Formula 4)

$$A = \{(I)^2 + (Q)^2\}^{1/2} \qquad \text{(equitation 4)}$$

The comparing unit 2 is inputted with the amplitude value A to be calculated by the power calculating unit 1 and the maximum amplitude Ath described above. Then, the comparing unit 2 compares the size of this amplitude value A with that of this maximum amplitude Ath to notify the result of the comparison as a select signal to the selector unit 8.

The dividing unit 3 is inputted with the amplitude value A to be calculated by the power calculating unit 1 and the maximum amplitude value Ath. The dividing unit 3 outputs the value $\alpha$ to the two multiplication units 4 and 5 as multiplication coefficient. The value $\alpha$ can be obtained from the result of dividing the maximum amplitude value Ath by the amplitude value A. Here, the multiplication value $\alpha$ can be shown in the equitation (5).

(Formula 5)

$$\alpha = Ath/A \qquad \text{(equitation 5)}$$

One multiplication unit 4 is inputted with the spreaded signal S1 (I) with the I component and the multiplication value $\alpha$ to be obtained by the dividing unit 3. Then, the multiplication unit 4 outputs the division result ($\alpha \cdot$ S1 (I))

of the spreaded signal S1 (I) with the I component and the multiplication value $\alpha$ to the selector unit 8.

Similarly, other multiplication unit 5 is inputted with the spreaded signal S1 (Q) with the Q component and the multiplication value $\alpha$ to be obtained by the dividing unit 3. Then, the multiplication unit 4 has a function to output the division result ($\alpha \cdot$ S1 (Q)) of the spreaded signal S1 (Q) with the Q component and the multiplication value $\alpha$ to the selector unit 8.

One delay circuit 6 has a function to delay the spreaded signal S1 (I) with the I component to be inputted therein and output it to the selector unit 8.

Similarly, other delay circuit 7 has a function to delay the spreaded signal S1 (Q) with the Q component to be inputted therein and output it to the selector unit 8.

Here, as a delay time for delaying the signals by the two delay circuits 6 and 7, for example, based on the time required for the process in the power calculation unit 1, the dividing unit 3 and the multiplication units 4 and 5, the time for inputting the output signals from the two dividing units 4 and 5 and the output signals from the two delay circuits 6 and 7 are simultaneously (or almost at the same time, to the effective extent practically) inputted to the selector unit 8.

The selector unit 8 is inputted with the multiplication result of the I component from the two multiplication units 4 and 5 and the multiplication result of the Q component from the two delay circuits 6 and 7. Further, the selector unit 8 is inputted with the spreaded signal S1 (I) with the I component and the spreaded signal S1 (Q) with the Q component from the two delay circuits 6 and 7. Then, based on the select signal to be inputted from the comparing unit 2, the selector unit 8 has a function to output either one of two multiplication results (the I component and the Q component) or the two spreaded signals (the I component and the Q component) as the transmission signal (the I component and the Q component).

Specifically, the selector unit 8 of the present embodiment outputs the multiplication result of the I component to be inputted from one multiplication unit 4 as a transmission signal S2 (I) with the I component when the above amplitude value A is larger than the above maximum amplitude value Ath. Also, the selector unit 8 of the present embodiment outputs the multiplication result of the Q component to be inputted from other multiplication unit 5 as a transmission signal S2 (Q) with the Q component when the above amplitude value A is larger than the above maximum amplitude value Ath. On the other hand, when the above amplitude value A is not more than the maximum amplitude value Ath, the selector unit 8 outputs the spreaded signal S1 (I) with the I component to be inputted from one delay circuit 6 as the transmission signal S2 (I) with the I component and the selector unit 8 outputs the spreaded signal S1 (Q) with the Q component to be inputted from other delay circuit 7 as the transmission signal S2 (Q) with the Q component. The present embodiment is configured of the selected signal and the selector unit 8 so as to output the signals selectively.

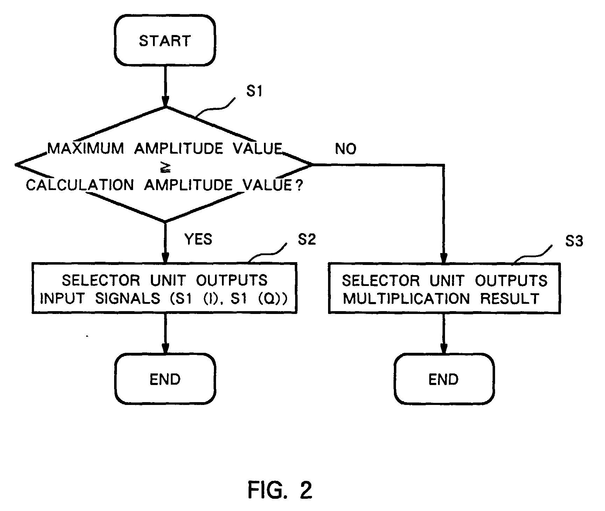

FIG. 2 illustrates an example of the procedure to be carried out by the limiter according to the present embodiment with the above mentioned configuration.

In the other words, the limiter of the present embodiment at first calculates the amplitude value A of the spreaded signal (the I component and the Q component) by the power calculation unit 1 and determines whether the calculated amplitude value A is not more than the specified maximum amplitude value Ath or not by the comparing unit 2 (step S1).

The limiter of the present invention selects the spreaded signal S1 (I) with the I component and the spreaded signal S1 (Q) with the Q component to be outputted from the two delay circuits 6 and 7 by the selector unit 8 to output them as the transmission signals (the I component and the Q component) when the comparing unit 2 determines that the calculated amplitude value A is not more than the maximum amplitude value Ath (step S2). On the other hand, when the comparing unit 2 determines that the calculated amplitude value A is more than the maximum amplitude value Ath, the selector unit 8 selects the multiplication result of the I component and the multiplication result of the Q component to output them as the transmission signals (the I component and the Q component)(step S3).

As described above, the limiter provided in the present CDMA transmitter limits the amplitude value A of the CDMA spreaded signals (the I component and the Q component) to be inputted under the specified maximum amplitude value Ath and the limiter is capable of outputting the CDMA spreaded signal with the limited amplitude A as the transmission signals (the I component and the Q component).

Accordingly, in the limiter provided in the present CDMA transmitter, the spreaded signals (the I component and the Q component) to be inputted are not subjected to the multiplication processing or the like except for the delay processing limiter so that the spreaded signal is directly outputted when the amplitude value A of the spreaded signal is not more than the maximum amplitude value Ath. As a result, the accuracy of the transmission signals in this state can be improved compared with the case that the conventional limiter is used. The conventional limiter outputs the result that the spreaded signals to be inputted are always multiplied as a transmission signal.

Also, the limiter according to the present embodiment provided in the CDMA transmitter is composed of a logic circuit without using a memory such as ROM to cause a problem as described above in the conventional example. Therefore, it can prevent the required capacity of the memory from being increased to be observed as an index function even when the bit number of the spreaded signals (the I component and the Q component) is increased. Further this limiter is suitable for making LSI. Since the above effect can be more obtained when the bit number of the spreaded signal to be inputted in the limiter is increased, the CDMA transmitter of the present embodiment brings about a great effect, when applied to the base station equipment with a large number of multiplexed channels. However, the CDMA transmitter of the present embodiment may be applied not only in the base station equipment but also in the mobile station equipment.

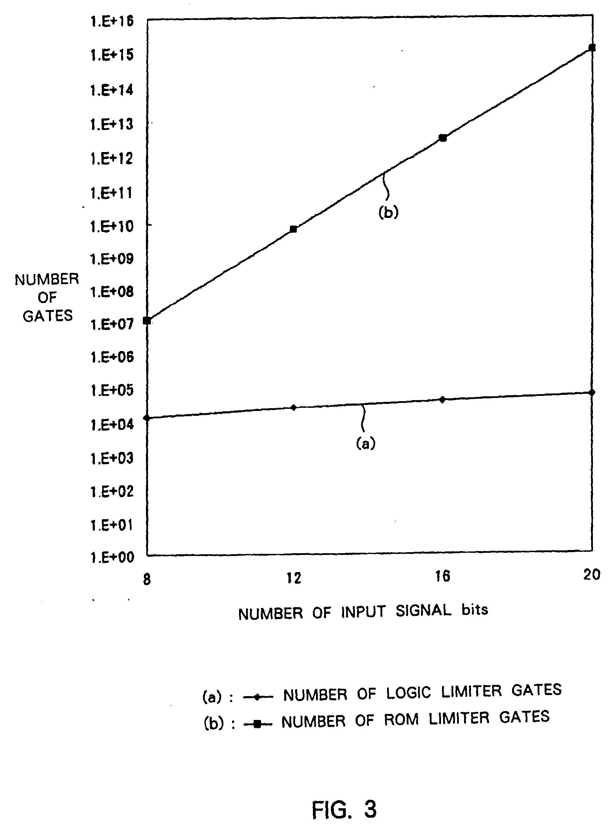

FIG. 3 illustrates an example of the result from the comparison between the number of gates of the limiter of the present embodiment and the number of conversion gates. The limiter of the present embodiment is configured to use, for example, a logic circuit (hereinafter, it is referred as to ROM limiter). Specifically, a graph in FIG. 3 illustrates a relation between the bit number of the spreaded signals (the I component and the Q component) to be inputted in the present logic limiter and the gate number to be required in the logic limiter by (a). On the other hand, the graph in FIG. 3 illustrates a relation between the bit number of the spreaded signals (the I component and the Q component) to be inputted in the conventional ROM limiter and the gate number to be required in the ROM limiter by (b). A lateral axis of the graph indicates the bit number (bit) of the logic limiter and the spreaded signals (the I component and the Q component) to be inputted in the logic limiter and the ROM limiter. A longitudinal axis indicates the gate number (the conversion number in the case of ROM limiter) of the logic limiter and the ROM limiter.

As shown in the graph in FIG. 3, the gate number of the conventional ROM limiter is increased to be observed as an index function in response to the bit number of the spreaded signals. However, the gate number of the present logic limiter is increased in proportion to the bit number of the spreaded signals. The present logic limiter can decrease the gate number greatly compared with the conventional ROM limiter. The comparison result shown in FIG. 3 is obtained by using the grid arithmetic equitation described in the static RAM data book which come onto the market.

As shown in FIG. 1, the present embodiment comprises distribution means of the present invention to distribute the spreaded signal S1 (I) with the I component and the spreaded signal S1 (Q) with the Q component into a plurality of signals. The (CDMA) spreaded signals of the present invention may comprise, for example, a spreaded signal, which is not multiplexed. Further, the (CDMA) spreaded signals of the present invention may comprise, for example, a plurality of spreaded signals, which are spreaded by using the spreaded codes, which are different from each other.

The present embodiment comprises comparing means of the present invention to compare the size of the amplitude value of the spreaded signal to be calculated by the power calculation unit 1 and the size of the specified maximum amplitude value Ath using the comparing unit 2.

The present embodiment comprises amplitude value conversion means of the present invention such that two multiplication units 4 and 5 convert the amplitude value A of the spreaded signal (the I component and the Q component) into the maximum amplitude value Ath using the multiplication coefficient $\alpha$. The dividing unit 3 calculates the multiplication coefficient $\alpha$ by using the amplitude value A of the spreaded signal and the maximum amplitude value Ath, which are calculated by the power calculating unit 1. In the present embodiment, there is a preferable embodiment to convert the amplitude value A of the spreaded signal into the maximum amplitude value Ath. However, there may be a configuration, for example, to convert the amplitude value A of the spreaded signal into the amplitude value smaller than the maximum amplitude value Ath.

Further, the present embodiment comprises selecting means of the present invention such that based on the selected signal to be inputted from the comparing unit 2, the selector unit 8 outputs the signals with the amplitude value converted by the multiplication units 4 and 5 as a transmission signal (communication processing signal) S2 (I) with the I component and a transmission signal (communication processing signal) S2 (Q) with the Q component when the amplitude value A of the spreaded signal (the I component and the Q component) is larger than the maximum amplitude value Ath. On the other hand, the selecting means outputs the signals to be inputted via the delay circuits 6 and 7 as a transmission signal (communication processing signal) S2 (I) with the I component and a transmission signal (communication processing signal) S2 (Q) with the Q component when the amplitude value A of the spreaded signal (the I component and the Q component) is smaller than the maximum amplitude value Ath.

In the present embodiment, there is a preferable embodiment to select the signals to be inputted via the delay circuits 6 and 7 and output from the selector unit 8 when the amplitude value A of the spreaded signal is equal to the maximum amplitude value Ath. However, in this sate, there may be a configuration such that the selector unit 8 selects the signals with the amplitude value converted by the multiplication units 4 and 5 and output them.

In the present embodiment, there are provided the delay circuits 6 and 7 to adjust the timing of the signal processing as described above. However, for example, it is possible to adjust the timing of the signal processing by providing a buffer memory for storing the spreaded signals S1 (I) and S2 (Q) in the selector unit 8 temporally. In other words, any ways may be acceptable for adjusting the signal processing, which can operate the limiter of the present embodiment efficiently in practice.

Furthermore, the CDMA transmitter of the present invention comprises an amplifier, i.e. the transmitting power amplifiers 56 and 76 in the present embodiment, for amplifying the transmission signals S2 (I) and S2 (Q) to be outputted from the selector unit 8 in the selecting means of the present invention. The maximum amplitude value Ath is set corresponding to the range of the present amplifier. Further, as the maximum amplitude value Ath, various values may be set corresponding to the configuration or the like of the CDMA transmitter.

The limiter provided in the CDMA transmitter according to a second embodiment of the present invention is explained with reference to the drawings.

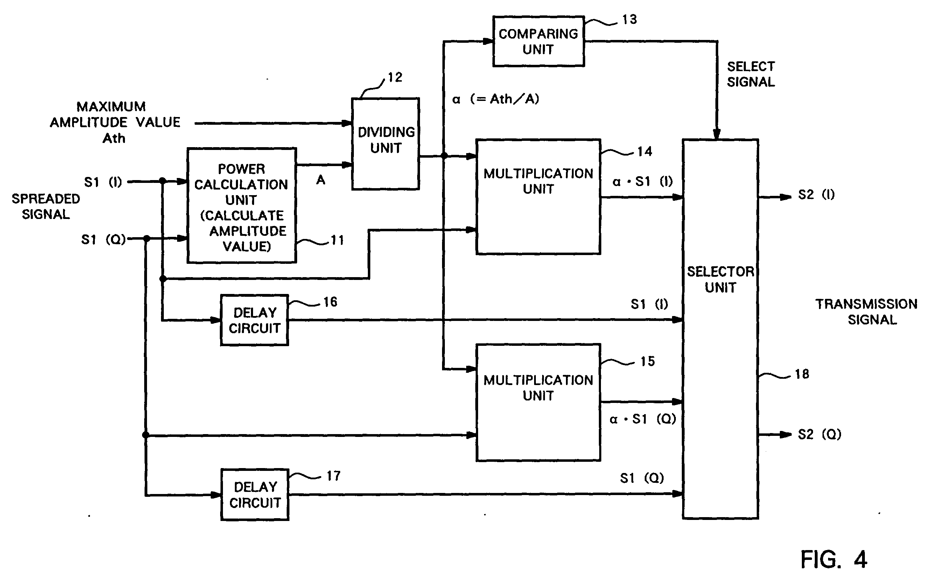

FIG. 4 illustrates an example of a circuit for the limiter provided in the CDMA transmitter according to the present embodiment. The limiter comprises a power calculating unit 1, a dividing unit 12, a comparing unit 13, two multiplication units 14 and 15, two delay circuits 16 and 17 and a selector unit 8 as same as the limiter of the above first embodiment shown in FIG. 1. However, the comparing unit 13 carries out the comparison processing in the different way compared to the first embodiment.

The following explanations are made mainly for the limiter, which is different from that of the first embodiment shown in FIG. 1.

In the limiter of the present embodiment, a predetermined maximum amplitude value Ath is inputted in the dividing unit 12. The power calculating unit 11 has a function to output the calculated amplitude value A into the dividing unit 12.

Further, the dividing unit 12 has a function to output a multiplication value $\alpha$ obtained from the dividing processing to the comparing unit 13, the two multiplication units 4 and 5.

The comparing unit 13 of the present invention compares the amount of the multiplication value $\alpha$ to be inputted in the dividing unit 12 with 1, so that the comparing unit 13 can compare the amount of the amplitude value A of the spreaded signal (the I component and the Q component) with the amount of the maximum amplitude value Ath. Specifically, when the multiplication value $\alpha$ is not less than 1, it can be assumed that the amplitude value A of the spreaded signal is not more than the maximum amplitude value Ath. On the other hand, when the multiplication value $\alpha$ is less than 1, it can be assumed that the amplitude value A of the spreaded signal is more than the maximum amplitude value Ath.

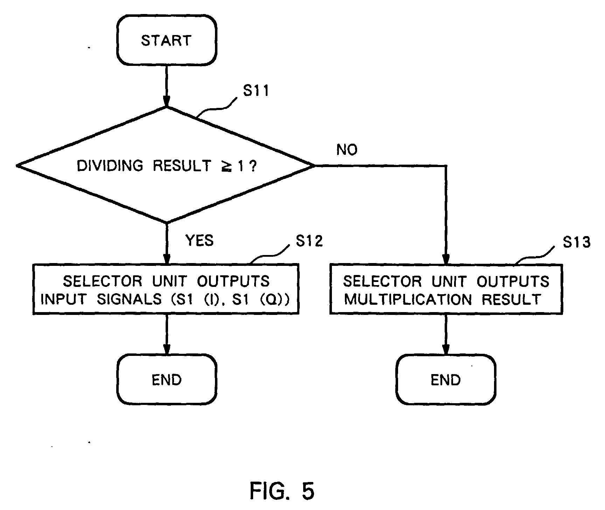

FIG. 5 shows an example of a procedure to be carried out by a limiter according to the present embodiment of the present invention.

In the other words, the limiter of the present embodiment calculates the amplitude value A of the spreaded signal (the I component and the Q component) by using the power calculation unit 11 and calculates the multiplication value $\alpha$, which is a ratio between the calculated amplitude value A and the predetermined maximum amplitude value Ath. Then, the limiter determines whether the calculated multiplication value $\alpha$ is more than 1 by using the comparing unit 13 (step S11).

The limiter according to the present embodiment selects the spreaded signal S1 (I) with the I component and the spreaded signal S1 (Q) with the Q component to be outputted from the two delay circuits 16 and 17 to output them as transmission signals (the I component and the Q component) if the limiter determines that the multiplication value $\alpha$ is more than 1 (step S12). On the other hand, if the limiter determines that the multiplication value $\alpha$ is less than 1, the limiter selects the multiplication result of the I component and the multiplication result of the Q component, which are calculated by the two multiplication units 14 and 15 to output them as transmission signals (the I component and the Q component)(step S13).

As described above, the limiter provided in the CDMA transmitter of the present embodiment is capable of limiting the amplitude value A of the CDMA spreaded signal (the I component and the Q component) to a value not more than the predetermined maximum amplitude value Ath and outputting them as transmission signals (the I component and the Q component).

Accordingly, the limiter provided in the CDMA transmitter of the present embodiment also have the same effect as that of the limiter of the first embodiment shown in FIG. 1.

Further, the present embodiment comprises comparing means of the present invention such that the comparing unit 13 compares the amount of the multiplication value $\alpha$ calculated by the dividing unit 12 with 1 to compare the amount of the amplitude value A of the spreaded signal and the predetermined maximum amplitude value Ath.

The limiter provided in the CDMA transmitter according to a third embodiment of the present invention is explained with reference to the drawings.

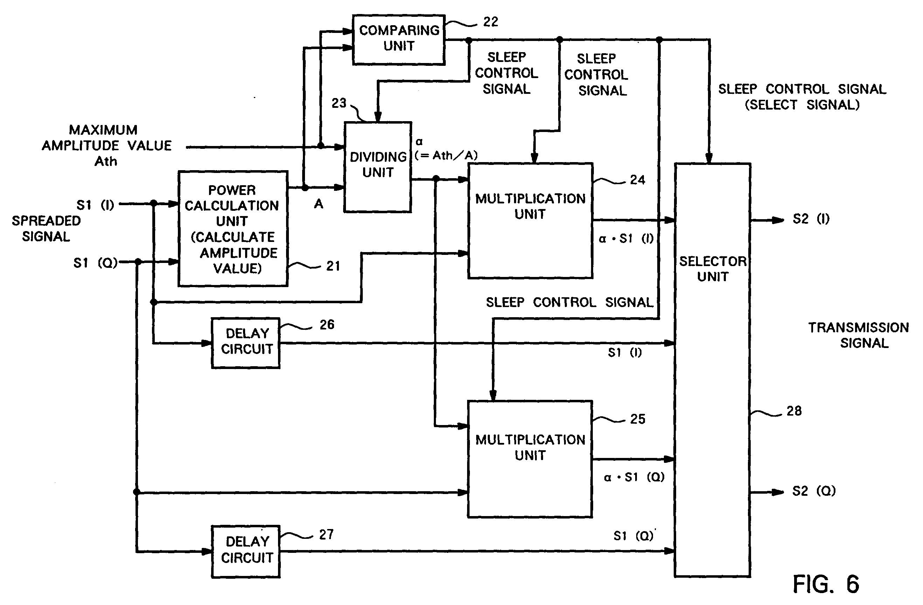

FIG. 6 illustrates an example of a circuit for the limiter provided in the CDMA transmitter according to the present embodiment. The limiter comprises a power calculating unit 21, a comparing unit 22, a dividing unit 23, two multiplication units 24 and 25, two delay circuits 26 and 27 and a selector unit 28 as same as the limiter of the above first embodiment shown in FIG. 1. However, the limiter of the present embodiment is different from that of the first embodiment in that the comparing unit 22 has a function to carry out a predetermined sleep control.

The following explanations are made mainly for the limiter, which is different from that of the first embodiment shown in FIG. 1.

As described above, the comparing unit 22 of the present embodiment has a function to effect the sleep control. Specifically, the function to effect the sleep control comprises a function such that a sleep control signal controls the dividing unit 23, the two multiplication units 24 and 25 and the selector unit 28 or the like to sleep, i.e., rest the amplitude control processing carried by the dividing unit 23 and the two multiplication units 24 and 25 and the selecting processing by the selector unit 28, when the amplitude value A of the spreaded signal calculated by the power calculating unit 21 is not more than the predetermined maximum amplitude value Ath.

Furthermore, when the selector unit 28 of the present embodiment is rested, for example, as described above, the spreaded signal S1 (I) with the I component and the spreaded signal S1 (Q) with the Q component to be inputted in the two delay circuits 26 and 27 are outputted as the transmission signals S2 (I) and S2 (Q).

In the present embodiment, there is a preferable embodiment to have a configuration in which the selected signal is used also as the sleep control signal, i.e., a configuration in which the select signals, i.e., the sleep control signal is outputted from the comparing unit 22 to respective processing units 23 through 25 and 28. However, in the present embodiment, there may be a configuration such that the selected signal and the sleep control signal are composed separately.

There is no limitation with regard to the ways to restart operation of respective processing units 23 through 25 after resting them. In the present embodiment, there is provided a configuration such that the comparing unit 22 controls respective processing units 23 through 25 by the sleep control signal to restart the operation of the respective processing units 23 through 25, for example, when the amplitude value A of the spreaded signal to be calculated by the power calculation unit 21 is larger than the maximum amplitude value Ath. Further, the other example may be available such that the respective processing units 23 through 25 restart the operation by themselves in response to the passage of predetermined time after respective processing units 23 through 25 are rested.

According to the above configurations, the limiter provided in the CDMA transmitter of the present embodiment limits the amplitude value A of the CDMA spreaded signals (the I component and the Q component) to less than the predetermined maximum amplitude value Ath and outputs them as transmission signals (the I component and the Q component). In this case, the limiter rests the operation by the dividing unit 23 and the multiplication units 24 and 25, for example, when the amplitude value A is not more than the maximum amplitude value Ath.

Therefore, when the limiter provided in the CDMA transmitter of the present embodiment rests the amplitude control processing and the selecting processing when these processings are not required, so that it is possible to reduce the electric power consumption and to improve the durability of the circuit.

An example of the electric power consumption is explained below, which can be reduced by the above described sleep control.

For example, according to "0.35 μ CMOS gate array data book", which is commercially available, the electric power consumption P[μW] is shown by the equitation (6) by using a source voltage D[V], an operational frequency F[MHz], a used BC number (gate scale) B[gate] and an operation percentage Z[%].

(Formula 6)

$$P = (0.059) \times (D^2) \times (F) \times (B) \times (Z) \qquad \text{(equitation 6)}$$

Specifically, providing that in a multiplier composing the multiplication units 24 and 25, the source voltage D = 3.0, the operational frequency F = 4.096, the operation percentage Z = 0.35 and the gate scale B = 4202, the electric power consumption P = 3199[μW] is obtained. In the whole limiter, providing that the source voltage D, the operational frequency F, the operation percentage Z are the same value and the gate scale B = 20301, the electric power consumption P = 15454[μW] is obtained.

Accordingly, such a configuration can reduce the electric power consumption by 20% by applying the above mentioned sleep control to the multiplier. Thus, the limiter provided in the CDMA transmitter of the present embodiment can reduce the electric power consumption to a large extent compared to, for example, the limiter without being given the sleep control.

In the present embodiment, sleep means of the present invention is configured of a function such that the comparing unit 22 rests the operation of the dividing unit 23, the multiplication units 24 and 25 to reduce the electric power consumption based on the comparison result between the amplitude value A of the spreaded signal to be calculated by the power calculation unit 21 and the maximum amplitude value Ath, when the amplitude value A is not more than the maximum amplitude value Ath. The dividing unit 23, the multiplication units 24 and 25 comprise the amplitude value conversion means. Depending on the configuration of the limiter, as objects to be rested, there may be a whole or a portion of the processing of the amplitude value conversion means of the present invention.

In the present embodiment, there is a preferable embodiment to have a configuration in which the multiplication units 24 and 25 are rested by the above described sleep control when the amplitude value A of the spreaded signal and the maximum amplitude value Ath are equal. However, in this state, a configuration, which keeps the operations of the multiplication units 24 and 25 or the like, i.e., which does not rest the multiplication units 24 and 25 or the like, may be employed.

The limiter provided in the CDMA transmitter according to a fourth embodiment of the present invention is explained with reference to the drawings.

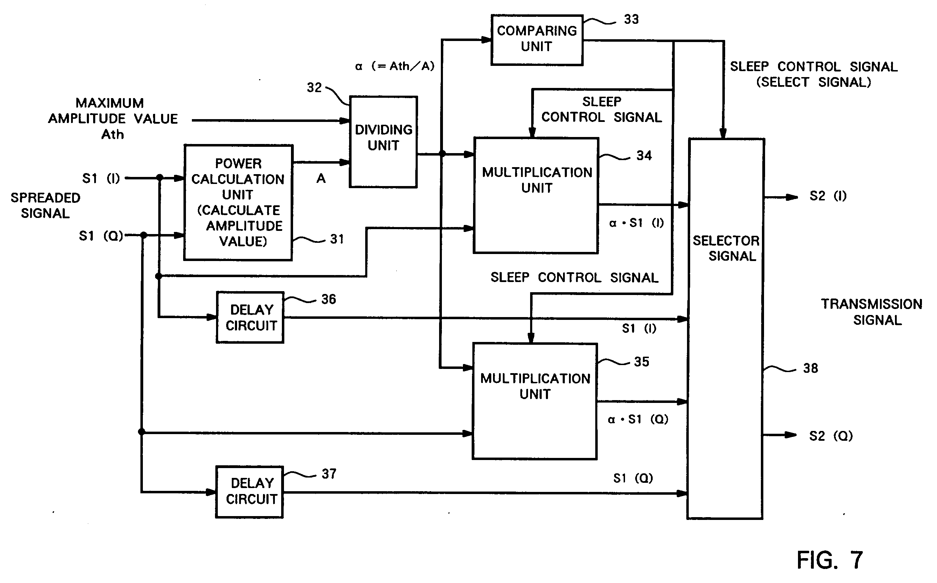

FIG. 7 illustrates an example of a configuration of a circuit for the limiter provided in the CDMA transmitter according to the present embodiment. The limiter comprises a power calculating unit 31, a comparing unit 33, a dividing unit 32, two multiplication units 34 and 35, two delay circuits 36 and 37 and a selector unit 38 as same as the limiter of the above second embodiment shown in FIG. 7. However, the limiter of the present embodiment is different from that of the second embodiment in that the comparing unit 33 has a function to carry out the same sleep control function as that shown in the above third embodiment.

The following explanations are made mainly for the limiter, which is different from that of the second embodiment shown in FIG. 4.

As described above, the comparing unit 33 of the present embodiment has a function to carry out the sleep control. Specifically, the function to carry out the sleep control is configured of a function to control the two multiplication units 34 and 35 by the sleep control signals and rest (sleep) the amplitude limitation process to be carried by the multiplication units 34 and 35 based on the comparison result between the multiplication coefficient $\alpha$ to be obtained from the dividing unit 32 and 1, when the amplitude value A of the spreaded signal to be calculated by the power calculation unit 31 is not more than the maximum amplitude value Ath.

According to the above configurations, the limiter provided in the CDMA transmitter of the present embodiment limits the amplitude value A of the CDMA spreaded signals (the I component and the Q component) to less than the predetermined maximum amplitude value Ath and outputs them as transmission signals (the I component and the Q component). In this case, the limiter rests the operation by the multiplication units 34 and 35, for example, when the amplitude value A is not more than the maximum amplitude value Ath.

Therefore, in the limiter provided in the CDMA transmitter of the present embodiment, it is possible to reduce the electric power consumption as same as the limiter of the above third embodiment shown in FIG. 6.

In the present embodiment, based on the comparison result between the multiplication coefficient $\alpha$ obtained from the dividing unit 32 and 1, when the amplitude value A of the spreaded signal is not more than the maximum amplitude value Ath, the comparing unit 33 of the present embodiment has a function to rest the processings to be carried out by the multiplication units 34 and 35, which configures the amplitude value conversion means of the present invention, and to reduce the electric power consumption. By this function, the sleep means of the present invention is configured.

The configurations of the CDMA transmitter and the limiter of the present invention are not always limited by the above described first through the fourth embodiments, but various configurations may be utilized. Further, there is no specific limitation for the CDMA transmitter and the limiter according to the present invention. The present invention may be widely available in, for example, the base station equipment and the mobile station equipment of the CDMA communication system or the like.

Various processings to be carried out by the CDMA transmitter and the limiter according to the present invention may be controlled by carrying out the control program by the processor in a hardware resource, which is provided with, for example, a processor and the memory or the like. The various processings also may be configured as a hardware circuit, which has independent function means for carrying out the processings.

The present invention may be held as a recording medium to be read by a computer such as a floppy disk and a CD-ROM or the like, which store the above control program. The control program to be inputted from the recording medium to the computer is carried out by the processor, so that the processing according to the present invention may be effected.

As described above, in order to limit the amplitude value of the CDMA spreaded signal to a value not more than a predetermined maximum amplitude value and output it, the CDMA transmitter or the limiter according to the present invention comprises distribution means for distributing a spreaded signal into at least two signals, comparing means for comparing the amount of the amplitude value of the spreaded signal with the amount of said maximum amplitude value, amplitude value conversion means for converting the amplitude value of one signal distributed by said distribution means into an amplitude not more than said maximum amplitude value and selecting means for outputting said one signal of which amplitude value is converted by said amplitude value conversion means as a transmission signal (a communication processing signal) based on the comparison result by said comparing means when the amplitude value of the spreaded signal is larger than said maximum amplitude value and outputting other signal distributed by said distribution means as a transmission signal (a communication processing signal) when the amplitude value of the spreaded signal is smaller than said maximum amplitude value. Accordingly, the present invention can improve the accuracy of a transmission signal (a communication processing signal) compared to the case using the conventional limiter to always output the multiplication result of the spreaded signal as a transmission signal (a communication processing signal).

The CDMA transmitter of the present invention may configure so as to rest the whole or a portion of the above described amplitude value conversion processing to output the other signals other than the spreaded signals as the transmission signals when the amplitude value of the spreaded signal is smaller than the maximum amplitude value. Therefore, it is possible to reduce the electric power consumption.

The CDMA transmitter of the present invention is provided with, for example, an amplifier for amplifying the transmission signals. The maximum amplitude value is set corresponding to the range of the amplifier.

**Claims**

1. A CDMA transmitter apparatus having a limiter for limiting an amplitude value of a CDMA spreaded signal to a value not more than a predetermined maximum amplitude value to output it; wherein said limiter comprising:

   distribution means for distributing a spreaded signal into at least two signals;
   comparing means for comparing the amount of the amplitude value of the spreaded signal with the amount of said maximum amplitude value;
   amplitude value conversion means for converting the amplitude value of one signal distributed by said distribution means into an amplitude not more than said maximum amplitude value; and
   selecting means for outputting said one signal of which amplitude value is converted by said amplitude value conversion means as a transmission signal based on the comparison result by said comparing means, when the amplitude value of the spreaded signal is larger than said maximum amplitude value and outputting other signal distributed by said distribution means as a transmission signal based on the comparison result by said comparing means, when the amplitude value of the spreaded signal is smaller than said maximum amplitude value.

2. A CDMA base station apparatus having a limiter for limiting an amplitude value of a CDMA spreaded signal to a value not more than a predetermined maximum amplitude value to output it; wherein said limiter comprising:

   distribution means for distributing a spreaded signal into at least two signals;
   comparing means for comparing the amount of the amplitude value of the spreaded signal with the amount of said maximum amplitude value;
   amplitude value conversion means for converting the amplitude value of one signal distributed by said distribution means into an amplitude not more than said maximum amplitude value; and
   selecting means for outputting said one signal of which amplitude value is converted by said amplitude value conversion means as a transmission signal based on the comparison result by said comparing means, when the amplitude value of the spreaded signal is larger than said maximum amplitude value and outputting other signal distributed by said distribution means as a transmission signal based on the comparison result by said comparing means, when the amplitude value of the spreaded signal is smaller than said maximum amplitude value.

3. A CDMA mobile station apparatus having a limiter for limiting an amplitude value of a CDMA spreaded signal to a value not more than a predetermined maximum amplitude value to output it; wherein said limiter comprising:

   distribution means for distributing a spreaded signal into at least two signals;
   comparing means for comparing the amount of the amplitude value of the spreaded signal with the amount of said maximum amplitude value;
   amplitude value conversion means for converting the amplitude value of one signal distributed by said distribution means into an amplitude not more than said maximum amplitude value; and
   selecting means for outputting said one signal of which amplitude value is converted by said amplitude value conversion means as a transmission signal based on the comparison result by said comparing means when the amplitude value of the spreaded signal is larger than said maximum amplitude value and outputting other signal distributed by said distribution means as a transmission signal when the amplitude value of the spreaded signal is smaller than said maximum amplitude value.

4. Apparatus according to claim 1, 2 or 3

   comprising sleep means for resting a whole or a portion of the processings carried out by said amplitude value conversion means to reduce the electric power consumption when the amplitude value of the spreaded signal is smaller than said maximum amplitude value based on the comparison result of said comparing means.

5. Apparatus according to claim 1, 2, 3 or 4

comprising an amplifier for amplifying the transmission signal outputted from said selecting means; wherein said maximum amplitude value is set corresponding to the range of said amplifier.

6. A limiter for limiting an amplitude value of a CDMA spreaded signal to a value not more than a predetermined maximum amplitude value to output it comprising:

distribution means for distributing a spreaded signal into at least two signals;
comparing means for comparing the amount of the amplitude value of the spreaded signal with the amount of said maximum amplitude value;
amplitude value conversion means for converting the amplitude value of one signal distributed by said distribution means into an amplitude not more than said maximum amplitude value; and
selecting means for outputting said one signal of which amplitude value is converted by said amplitude value conversion means as a transmission signal based on the comparison result by said comparing means when the amplitude value of the spreaded signal is larger than said maximum amplitude value and outputting other signal distributed by said distribution means as a transmission signal when the amplitude value of the spreaded signal is smaller than said maximum amplitude value.

7. A limiter for limiting an amplitude value of a CDMA spreaded signal to a value not more than a predetermined maximum amplitude value to output it; wherein said limiter comprising:

distribution means for distributing I component of a spreaded signal into three signals and distributing Q component of said spreaded signal into three signals;
amplitude value detecting means for detecting the amplitude value of the spreaded signal based on the first I component distribution signal and the first Q component distribution signal;
comparing means for comparing the amount of the amplitude value to be detected with the amount of said maximum amplitude value;
dividing means for dividing said maximum amplitude value by the amplitude value to be detected;
multiplication means for multiplying the second I component distribution signal and the dividing result by said dividing means; and the second Q component distribution signal and the dividing result by said dividing means;
delay means for delaying the third I component distribution signal and the third Q component distribution signal; and
selecting means for outputting the multiplication result with respect to the I component by said multiplying means as the I component of a transmission processing signal and outputting the multiplication result with respect to the Q component by said multiplying means as the Q component of the transmission processing signal, based on the comparing result by said comparing means, when the amplitude value of the spreaded signal is larger than said maximum amplitude value; outputting the third I component distribution signal delayed by said delay means as the I component of the transmission processing signal and outputting the third Q component distribution signal as the Q component of the transmission processing signal, based on the comparing result by said comparing means, when the amplitude value of the spreaded signal is smaller than said maximum amplitude value.

8. A limiter according to claim 7, wherein said comparing means comprises sleep means for resting a whole or a portion of the processings carried out by said dividing means and said multiplication means to reduce the electric power consumption when the amplitude value of the spreaded signal is smaller than said maximum amplitude value based on the comparison result of said comparing means.

9. A limiter for limiting an amplitude value of a CDMA spreaded signal to a value not more than a predetermined maximum amplitude value to output it; wherein said limiter comprising:

distribution means for distributing I component of a spreaded signal into three signals and distributing the Q component of said spreaded signal into three signals;
amplitude value detecting means for detecting the amplitude value of the spreaded signal based on the first I component distribution signal and the first Q component distribution signal;
dividing means for dividing said maximum amplitude value by the amplitude value to be detected;
comparing means for comparing the amount of the amplitude value to be detected with the amount of said maximum amplitude value based on the dividing result by said dividing means;
multiplication means for multiplying the second I component distribution signal and the dividing result by said dividing means; and the second Q component distribution signal and the dividing result by said dividing means;

delay means for delaying the third I component distribution signal and the third Q component distribution signal; and

selecting means for outputting the multiplication result with respect to the I component by said multiplying means as the I component of a transmission processing signal and outputting the multiplication result with respect to the Q component by said multiplying means as the Q component of the transmission processing signal, based on the comparing result by said comparing means, when the amplitude value of the spreaded signal is larger than said maximum amplitude value; outputting the third I component distribution signal delayed by said delay means as the I component of the transmission processing signal and outputting the third Q component distribution signal as the Q component of the transmission processing signal, based on the comparing result by said comparing means, when the amplitude value of the spreaded signal is smaller than said maximum amplitude value.

10. A limiter according to claim 9, wherein said comparing means comprises sleep means for resting a whole or a portion of the processings carried out by said multiplication means and said multiplication means to reduce the electric power consumption when the amplitude value of the spreaded signal is smaller than said maximum amplitude value based on the comparison result of said comparing means.

FIG. 1

EP 1 094 614 A2

START

S1

MAXIMUM AMPLITUDE VALUE
$\geq$
CALCULATION AMPLITUDE VALUE?

NO

YES

S2

SELECTOR UNIT OUTPUTS
INPUT SIGNALS (S1 (I), S1 (Q))

S3

SELECTOR UNIT OUTPUTS
MULTIPLICATION RESULT

END

END

FIG. 2

(a) : —◆— NUMBER OF LOGIC LIMITER GATES

(b) : —■— NUMBER OF ROM LIMITER GATES

FIG. 3

FIG. 4

START

S11

DIVIDING RESULT $\geq$ 1 ?

NO

YES

S12

SELECTOR UNIT OUTPUTS
INPUT SIGNALS (S1 (I), S1 (Q))

S13

SELECTOR UNIT OUTPUTS
MULTIPLICATION RESULT

END

END

FIG. 5

FIG. 6

FIG. 7

EP 1 094 614 A2

TRANSMITTED
DATA D1 → SPREADING UNIT (F1)

TRANSMITTED
DATA D2 → SPREADING UNIT (F2)

TRANSMITTED
DATA Dn → SPREADING UNIT (Fn)

SPREADING UNIT → ADDITION COMPOSITION UNIT (Σ) (51) → LIMITER (52) → ROLL OFF FILTER UNIT (53)

DIGITAL BASE BAND UNIT (41)

DIGITAL BASE BAND SIGNAL

D/A CONVERTER (54) → MODULATOR (55) → TRANSMITTING POWER AMPLIFIER (56) → (57)

ANALOG BASE BAND/RF UNIT (42)

FIG. 8

FIG. 9

TRANSMISSION SIGNAL

S2 (I)          S2 (Q)

FIG. 10

91

SPREADED
SIGNAL

S1 (I) ——→

S1 (Q) ——→

ROM
(ROM TABLE)

——→ S2 (I)

——→ S2 (Q)

TRANSMISSION
SIGNAL

FIG. 11

FIG. 12

RELATION BETWEEN NUMBER OF INPUT SIGNAL bits
AND ROM CAPACITY

FIG. 13

EP 1 094 614 A2

S1 (I) →

SPREADED
SIGNAL

S1 (Q) →

**101**

POLAR
COORDINATE
CONVERSION
CIRCUIT

AMPLITUDE
COMPONENT

**102**

AMPLITUDE
LIMITATION
CIRCUIT

PHASE COMPONENT

**103**

RECTANGULAR
COORDINATE
CONVERSION
CIRCUIT

→ S2 (I)

TRANSMISSION
SIGNAL

→ S2 (Q)

FIG. 14